# EUROPEAN PATENT SPECIFICATION

(11) **EP 1 252 014 B1**
(45) Date of publication and mention of the grant of the patent: **04.05.2005**
(21) Application number: 01913754.6
(22) Date of filing: 11.01.2001
(51) Int. Cl.: B32B 17/10

(54) **GLAZING PANELS**
VERBUNDGLASSCHEIBEN
VITRAGES

(30) Priority: 13.01.2000 EP 00830010
(43) Date of publication of application: 30.10.2002
(73) Proprietor: Pilkington Italia S.p.A., 66050 San Salvo (CH) (IT)
(72) Inventor: BOLOGNESE, Litterio, I-66054 Vasto (IT); BARATTUCCI, Nino, I-66054 Vasto (IT)
(74) Representative: Halliwell, Anthony Charles
(86) International application number: PCT/EP2001/000399
(87) International publication number: WO 2001/051279

(56) References cited:
- WO-A-00/26023
- WO-A-85/01725
- DE-C- 911 660
- DE-C- 19 622 566
- US-A- 3 794 809
- US-A- 4 744 844
- US-A- 5 208 080

## Description

This invention relates to laminated glass panes which incorporate a transparent functional film embedded between the laminating layers and to methods for the manufacture of such panes. The invention finds particular application in the manufacture of laminated automotive glazings i.e. windshields, sidelights, backlights and rooflights.

Laminated glass panes comprise two or more sheets of glass bonded together with an interlayer comprising one or more layers of a bonding resin which is typically polyvinylbutyral (PVB). The glass is normally an inorganic glass but rigid transparent organic materials such as polycarbonate may also be used. The resin used to bond the glass sheets may provide safety properties or establish a bond with a separate layer of the laminate, which separate layers may provide the desired safety properties. Commonly a layer of PVB or ethylene vinyl acetate having a thickness of the order of 0.2 mm to 1,0 mm typically 0.38 mm or 0.76 mm is used to provide a laminated automotive windshield having acceptable safety properties.

Increasingly laminated glass panes are incorporating a separate layer of a functional thermoplastic film within the interlayer. Most commonly this film is embedded between two or more layers of a bonding resin such as PVB as the PVB is known to bond well to the glass. Interlayers having a more complex construction i.e. two layers of functional film which may or may not be identical separated by an inner layer of bonding resin and placed between two outer layers of bonding resin may be employed. These functional films are used to impart additional properties to the pane such as solar control properties, heatability or increased safety. For example to provide a laminated glazing having heat insulating or solar protection properties the functional film may be provided with a thin coating comprising a silver layer embedded between two dielectric layers. An example of a material which is used to provide a functional film is biaxially stretched polyethylene terephthalate (PET). A typical laminated pane comprising a functional film formed from PET is described in USP 4799745.

One difficulty which may arise from the incorporation of a functional film into a laminated pane is the production of a laminate which is clear and free from any optical defects. The conventional laminating process using, for example a layer of PVB as the bonding resin comprises heating the laminate in an autoclave to a temperature at which the PVB resin softens and can flow to form a transparent clear film having no significant optical defects. The useful functional thermoplastic films generally have a higher melting point than the PVB resin and are not softened to the same degree at any particular temperature. The result may be the production of a laminate having a creased or wrinkled appearance. Such laminates are unacceptable for most uses especially for automotive glazing. This problem is particularly acute in relation to curved laminates such as automotive windshields especially those having a high degree of cross curvature where the tendency to form a laminate having a creased appearance is exacerbated.

European patent application 877664 describes a process for the production of a laminated glass pane comprising a PET film as part of the interlayer in which the PET is stretched prior to the lamination process in order to impart specific thermal shrinkage properties to the PET. The PET containing interlayer is placed between two glass panes and any excess is trimmed off prior to the lamination step. Such procedures have been found to alleviate but not completely remove the problem of wrinkling especially where the laminate is a curved laminate with a high degree of cross curvature. European patent application 882573 describes laminated panes comprising a PET containing interlayer which incorporates at least one recess which is provided with an auxiliary film in the area of the recess. USP 5208080 discloses a laminated glass pane having a functional film which has smaller dimensions than the individual glass panes. The recess which surrounds the functional film is filled with a strip of an auxiliary film which is preferably a strip of PVB. The use of such a strip of auxiliary film has been found to be disadvantageous in that it encourages the formation of air bubbles and other distortions at the boundary of the functional film and the auxiliary strip.

We have now discovered that the tendency to form a laminate having a creased or wrinkled appearance may be alleviated or even removed completely without the use of any auxiliary film if the functional film is reduced in size so that the outer edge thereof lies within the edge of the glass panes. Thus from one aspect this invention provides a process for the production of a curved laminated glass pane comprising a first glass pane and a second corresponding glass pane together with an interlayer comprising a first layer comprising a bonding resin, a second layer comprising a thermoplastic functional film and a third layer comprising a bonding resin having a reduced level of optical defects due to creasing of the interlayer which process comprises arranging the interlayer between the two glass panes such that the outer edges of both of the layers of bonding resin coincide with the edges of the two glass panes and pressing the assembly with the application of pressure and heat to form a laminated pane which is characterised in that the outer edge of the thermoplastic functional film lies within the outer edge of the two glass panes.

In a preferred embodiment the functional film will be cut so that the distance between the edge of the film and the edge of the pane is approximately the same around the entire circumference of the pane. However, we have discovered that the distance between the edge of the film and the edge of the glass may be smaller in areas where the film does not tend to crease. Thus in a less preferred embodiment for any particular pane the functional film is reduced in size only in the proximity of the areas where the film tends to become creased. The position of such areas may be determined empirically for each particular pane using a conventional functional film interlayer whose edge lies on or immediately adjacent to the edge of the pane. Where the film tends to crease it can be reduced in size until the degree of creasing is not noticeable. The resulting sheet can be used as a template for the production of other pieces of functional film for use in panes of the same size and shape. However in the preferred embodiment the functional film is reduced in size around all or substantially all of its circumference for ease of manufacture. The edge of the functional film will be at least 5.0 mm and preferably at least 10.0 mm within the edge of the glass pane.

The invention relates to glazings which have a relatively small radius; at least one curve having a radius of less than 1000 mm and possibly less than 10.0 mm at least one point on their surface.

The reduction in size of the functional film insert may result in its edge becoming visible in the finished laminated pane. This is neither desirable nor usually acceptable in automotive windshields in particular. For this reason we prefer to trim the functional film so that its edge lies in a preselected area in which it does not detract from the appearance of the finished laminate. In the preferred embodiment where the laminate is an automotive windshield the functional film is preferably trimmed so that its edge is hidden by the vehicle trim; is hidden by the solid obscuration band or lies within the fade out band. In our co-pending International Patent Application PCT/IB99/01786 we describe coated windshields wherein the edge of the coating is positioned so as to overlap with the fade out band. That application discloses laminates having a coated PET based functional film as part of the laminate layer which coated film is positioned so that the edge of the coating overlaps with the fade out band. Laminated glass windshields having an interlayer which comprises a thermoplastic functional film wherein the edge of the functional film lies within the obscuration band are believed to be novel and comprise a further aspect of the invention. Laminated glass windshields having an interlayer which comprises a thermoplastic functional film which is uncoated and the edge of which lies within the edges of the two glass panes are also believed to be novel and comprise a further aspect of this invention.

The laminates of this invention may be assembled using conventional techniques. Normally a first lower glass pane will be cut to the required shape and size. A first sheet of resin, e.g. PVB, is then positioned on the lower glass sheet, the functional film layer is then placed on top of the first sheet of resin in the desired alignment relative to the edge of the lower glass pane, a second resin layer is positioned above the functional film layer and finally the second glass sheet is positioned on top. Any excess of PVB is removed and then the assembly is degassed and placed in an autoclave.

In a preferred method, at least one and preferably both of the layers of the resin are pre-assembled with a pre-cut piece of functional film positioned either on top of one resin layer or between two resin layers. This preassembled interlayer can be introduced onto the lower glass sheet which saves time and reduces the likelihood of gas or atmosphere debris being trapped within the laminate and spoiling its appearance. The resin layer may extend beyond the edge of the functional film and in particular may extend beyond the edge of the glazing. Any excess extending beyond the edge of the glazing will normally be removed by trimming the edge back to the edge of the glazing prior to the lamination step. In the preferred embodiment of this invention the laminate will be formed in the normal way without the use of any auxiliary strip of any kind in the area between the edge of the functional film and the outermost edge of the glazing.

In an alternative embodiment the interlayer may comprise a preformed bilayer material itself comprising a layer of bonding resin and a layer of a thermoplastic functional film. The extremity of the functional film may be trimmed and removed. The trimmed bilayer may then be combined with a second layer of a bonding resin to form the interlayer. In a further embodiment the interlayer may comprise a preformed trilayer material comprising a layer of bonding resin, a layer of thermoplastic functional film and a second layer of a bonding resin. The extremity of the functional film may be trimmed so as to produce an interlayer useful in the glazings of this invention.

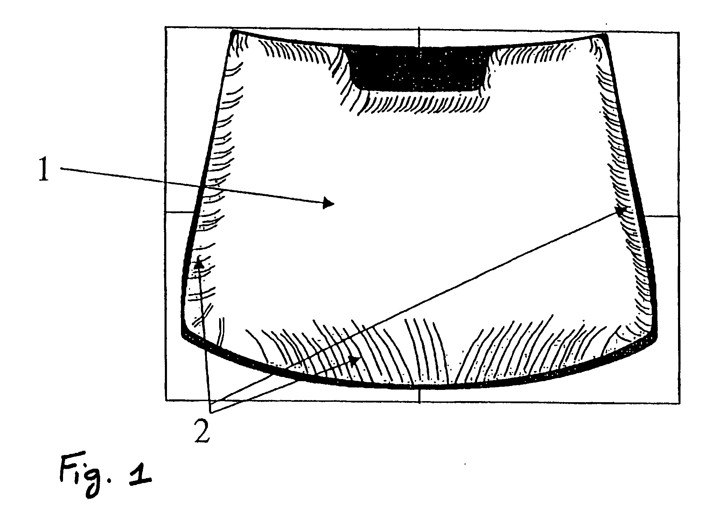

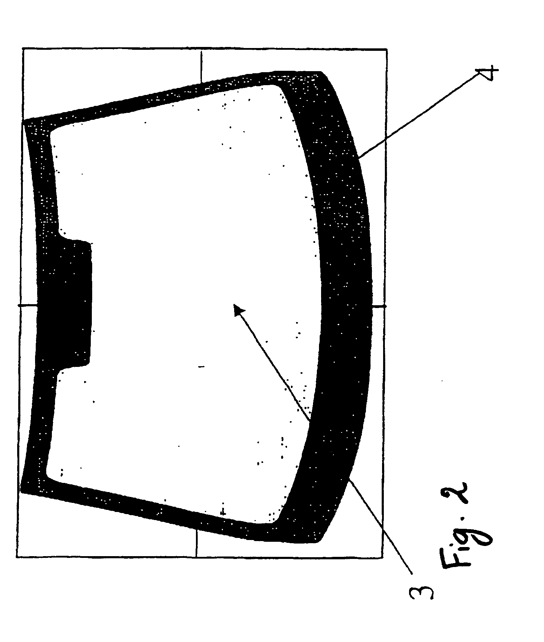

The invention is illustrated by reference to the accompanying drawings in which Figure 1 is a diagrammatic representation of a windshield constructed according to the prior art and Figure2 is a diagrammatic representation of a windshield according to the present invention.

In Figure 1 the PET layer 1 extends almost to the edge of the windshield. The PET is wrinkled at the edges 2 of the windshield following the lamination process. In Figure 2 the PET layer is cut back and does not extend to the edge of the windshield. The outer edge 4 of the windshield does not comprise a PET layer. The PET is free from wrinkles.

## Claims

1. A process for the production of a curved laminated glass pane wherein at least one part of the curved surface has a radius of less than 1000 mm said laminate comprising a first glass pane and a second corresponding glass pane together with an interlayer comprising a bonding layer a thermoplastic functional film and a second bonding layer which process comprises arranging the interlayer between the two glass panes and pressing the assembly with the application of pressure and heat to form a laminated pane which is **characterised in that** in order to reduce the tendency to produce a laminate having a wrinkled or creased appearance following the lamination process the outer edge of the functional film lies at least 5.0 mm inside the outer edge of the glass planes and the outer edges of the bonding resin coincide with the edge of the glass panes.

2. A process according to claim 1 **characterised in that** the edge of the thermoplastic film lies at least 10 mm inside the edge of the glass panes throughout its circumference.

3. A process according to either of claims 1 or 2 **characterised in that** the distance between the edge of the thermoplastic film and the edge of the glass pane is constant around the entire circumference of the pane.

4. A process according to any of the preceding claims **characterised in that** the interlayer is preassembled prior to its being positioned between the two glass panes.

## Patentansprüche

1. Verfahren zur Herstellung einer gebogenen Verbundglasscheibe, wobei mindestens ein Teil der gebogenen Oberfläche einen Radius von unter 1000 mm hat und wobei das Laminat umfasst:
eine erste Glasscheibe und eine zweite, entsprechende Glasscheibe zusammen mit einer Zwischenschicht, die eine Klebeschicht, einen thermoplastischen funktionellen Film und
eine zweite Klebeschicht enthält, wobei das Verfahren die Schritte umfasst:
Anordnen der Zwischenschicht zwischen den zwei Glasscheiben und Pressen der Anordnung unter Aufbringung von Druck und
Wärme so dass eine Verbundscheibe ausgebildet wird, die **dadurch gekennzeichnet ist, dass**
zur Verringerung der Tendenz, dass ein Laminat hergestellt wird, welches ein faltiges oder zerknittertes Aussehen hat, nach dem Laminierungsverfahren die Außenkante des thermoplastischen funktionellen Films mindestens 5,0 mm innerhalb der Außenkante der Glasscheiben liegt und die Außenkanten des Klebharzes mit den Kanten der Glasscheiben zusammenfallen.

2. Verfahren nach Anspruch 1, **dadurch gekennzeichnet, dass** die Kante des thermoplastischen Films an seinem gesamten Umfang mindestens 10 mm innerhalb der Kante der Glasscheiben liegt.

3. Verfahren nach Anspruch 1 oder 2, **dadurch gekennzeichnet, dass** der Abstand zwischen der Kante des thermoplastischen Films und der Kante der Glasscheibe um den gesamten Umfang der Scheibe herum der gleiche ist.

4. Verfahren nach einem der vorhergehenden Ansprüche, **dadurch gekennzeichnet, dass** die Zwischenschicht vormontiert ist, bevor sie zwischen den zwei Glasscheiben positioniert wird.

## Revendications

1. Procédé de production d'une vitre en verre stratifiée courbée, dans lequel au moins une partie de la surface courbée présente un rayon inférieur à 1000 mm, ledit stratifié comprenant une première vitre de verre et une seconde vitre de verre correspondante, ainsi qu'une couche intermédiaire comprenant une couche de liaison, un film fonctionnel thermoplastique et une seconde couche de liaison, lequel procédé comprend l'agencement de la couche intermédiaire entre les deux vitres de verre et la compression de l'ensemble grâce à l'application d'une pression et de chaleur pour former un verre stratifié qui est **caractérisé en ce que**, de manière à réduire la tendance à produire un stratifié présentant un aspect plissé ou strié à la suite du processus de stratification, le bord extérieur du film fonctionnel se situe au moins à 5,0 mm à l'intérieur du bord extérieur des vitres de verre et les bords extérieurs de la résine de liaison coïncident avec les bords des vitres de verre.

2. Procédé selon la revendication 1, **caractérisé en ce que** le bord du film thermoplastique se situe à au moins 10 mm à l'intérieur du bord des vitres de verre sur toute sa circonférence.

3. Procédé selon l'une quelconque des revendications 1 ou 2, **caractérisé en ce que** la distance entre le bord du film thermoplastique et le bord de la vitre de verre est constante autour de toute la circonférence de la vitre.

4. Procédé selon l'une quelconque des revendications précédentes, **caractérisé en ce que** la couche intermédiaire est pré-assemblée avant d'être positionnée entre les deux vitres de verre.
